(19) Europäisches Patentamt
European Patent Office
Office européen des brevets

(11) Veröffentlichungsnummer: **0 267 532 B1**

# (12) EUROPÄISCHE PATENTSCHRIFT

(45) Veröffentlichungstag der Patentschrift: **19.06.91**

(51) Int. Cl.[5]: **C09D 5/44**, C08G 18/54

(21) Anmeldenummer: **87116221.0**

(22) Anmeldetag: **04.11.87**

## (54) Verfahren zur Herstellung von selbstvernetzenden kationischen Bindemitteln.

(30) Priorität: **07.11.86 AT 2969/86**

(43) Veröffentlichungstag der Anmeldung:
**18.05.88 Patentblatt 88/20**

(45) Bekanntmachung des Hinweises auf die Patenterteilung:
**19.06.91 Patentblatt 91/25**

(84) Benannte Vertragsstaaten:
**BE CH DE ES FR GB IT LI NL SE**

(56) Entgegenhaltungen:
**EP-A- 0 158 128**
**EP-A- 0 209 857**
**DE-A- 2 755 907**
**DE-A- 3 311 516**

(73) Patentinhaber: **Vianova Kunstharz Aktiengesellschaft**

**A-8402 Werndorf(AT)**

(72) Erfinder: **Paar, Willibald, Dr.**
**Schanzelgasse 19**
**A-8010 Graz(AT)**

EP 0 267 532 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services

## Beschreibung

Die Erfindung betrifft ein Verfahren zur Herstellung von selbstvernetzenden nach Protonierung wasserlöslichen Lackbindemitteln auf der Basis von Reaktionsprodukten aus blockierte Isocyanatgruppen aufweisenden Aminoalkylierungsprodukten von Phenolen mit Formaldehyd und NH-funktionellen Verbindungen, insbesonders Addukten von primären Aminen an Diepoxidharze, und anschließender Veretherung der phenolischen Hydroxylgruppen mit Epoxidverbindungen. Die nach diesem Verfahren hergestellten Produkte sind besonders für die Formulierung hochwertiger Elektrotauchlacke geeignet.

Aus der EP-A2-02 09 857 sind kationische Lackbindemittel bekannt, die durch einen schematischen Aufbau

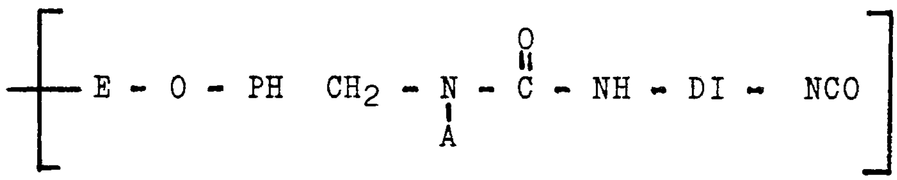

1 oder 2

gekennzeichnet sind, wobei

E - den Rest eines Epoxidharzes
- PH - den Rest eines Phenols
A - den Rest eines Amins und
- DI - NCO den Rest eines halbblockierten Diisocyanats darstellt.

Die Produkte sind in überraschend glatter Weise herstellbar und ergeben nach Protonierung wasserverdünnbare Lacke, die gute applikatorische Eigenschaften aufweisen und bereits bei einer Einbrenntemperatur von ca 160 C einwandfrei vernetzte Filme ergeben.

Es hat sich jedoch gezeigt, daß Lackierungen auf dieser Basis bei den verschiedenen Korrosionsprüfungen, wie Salzsprühtest oder Salzwasser-Wechseltest nicht die, insbesonders von der Kraftfahrzeugindustrie, geforderten Werte erreichen.

Es würde nun gefunden, daß die Kondensate gemäß vorstehendem Aufbau vor der Umsetzung mit dem Epoxidharz in kontrollierbarer Weise einer Verknüpfung der Phenolkerne durch basische NH-funktionelle Verbindungen und Formaldehyd unterworfen werden können. Durch diese Maßnahme, besonders wenn die Verknüpfung über NE-funktionelle Epoxidharz-Aminaddukte erfolgt, kann der Korrosionsschutz der damit formulierten Lacke wesentlich verbessert werden.

Die Erfindung betrifft demgemäß ein Verfahren zur Herstellung von nach Protonierung wasserverdünnbaren, selbstvernetzenden kationischen Lackbindemitteln auf der Basis von blockierte Isocyanatgruppen aufweisenden Aminoalkylierungsprodukten von Phenolen und von Epoxidverbindungen, welches dadurch gekennzeichnet ist, daß man ein Kondensat der Formel

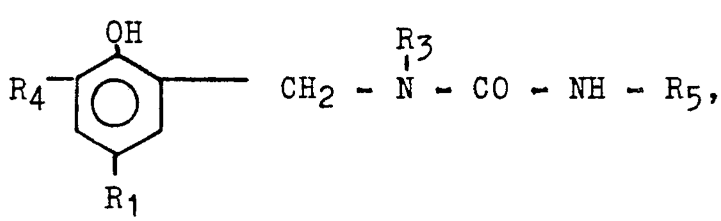

wobei

$R_1$ ein Wasserstoffatom, einen Alkylrest, einen Rest

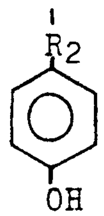 oder 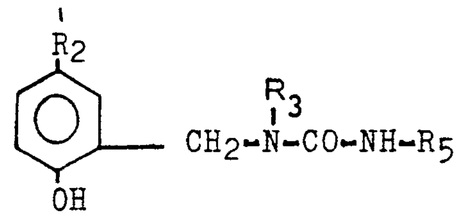 oder

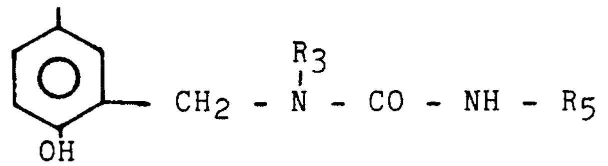,

$R_2$ einen Rest

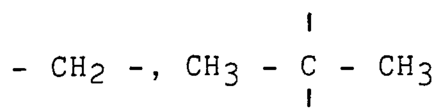

$R_3$ einen Alkyl-, Hydroxyalkyl- oder einen tert.-Aminoalkylrest,

$R_4$ ein Wasserstoffatom, bzw. bei $R_1$ = H, ein Wasserstoffatom oder einen Rest - $CH_2$-N($R_3$)-C0-NH-$R_5$,

und

$R_5$ den Rest, welcher aus einem mit einer monofunktionellen Verbindung halbblockierten Diisocyanat stammt, bedeutet,

mit, bezogen auf die formaldehydreaktiven Stellen der Phenolkörper des Kondensats, 0,3 bis 1,0 Mol Formaldehyd, vorzugsweise in Form von Paraformaldehyd, und mit einem N,N'-Dialkylendiamin und/oder N,N'-Dialkylpolyalkylendiamin oder mit einem Umsetzungsprodukt aus Dioder Polyepoxidverbindungen mit primären Aminen, vorzugsweise primär-tertiären Alkylendiaminen, bei 80 bis 130°C umsetzt, wobei eine, der molaren Menge des Formaldehyds äquivalente Menge an NH-Gruppen zum Einsatz kommt, und in einer weiteren Reaktionsstufe die phenolischen Hydroxylgruppen ganz oder teilweise mit Epoxidverbindungen umsetzt, wobei man die Ansätze so formuliert, daß durch das Kondensationsvorprodukt und/oder die Verknüpfungsreaktion und/oder durch das Blockierungsmittel für die Halbblockierung der Diisocyanate tertiäre Aminogruppen in einer Menge entsprechend einer Aminzahl von mindestens 25 mg KOH/g in das Endprodukt eingeführt werden.

Die Erfindung betrifft weiters die Verwendung der gemäß diesem Verfahren hergestellten kationischen Bindemittel zur Formulierung von wasserverdünnbaren Lacken, insbesonders von kathodisch abscheidbaren Elektrotauchlakken.

Die als Vorprodukte eingesetzten Phenol-Harnstoff-Kondensate sind in der EP-A2-0209857, auf welche als Referenz ausdrücklich verwiesen wird, ausführlich beschrieben. Es kann bei der Herstellung dieser Verbindungen einerseits von einem Aminoalkylierungsprodukt aus Phenol, primärem Amin und Formaldehyd ausgegangen werden und dieses an der NH-Gruppe mit dem halbblockierten Diisocyanat reagiert werden. Andererseits kann die Kondensation des Phenols auch mit dem Umsetzungsprodukt aus dem halbblockierten Diisocyanat und dem primären Amin erfolgen.

Bezüglich der Herstellung von Aminoalkylierungsprodukten von Phenolen, welche nach entsprechender Modifikation ebenfalls als Ausgangsprodukte für die vorliegende Erfindung in Frage kommen, wird auch auf die EP-A1-0158128 verwiesen.

Eine für die vorliegende Erfindung bevorzugte Gruppe von Kondensationsverbindungen hat als Ausgangsmaterialien zweikernige Phenole vom Typ der Diphenylolalkane, wie das Bisphenol A (4,4'-Diphenylolpropan) oder das Bisphenol F (4,4'-Diphenylolmethan). Der Formaldehyd kommt dabei vorzugsweise in Form von Paraformaldehyd (mit einem $CH_2O$-Gehalt von ca. 85 bis ca. 100 %) zum Einsatz. Als primäre aliphatische Amine werden neben primären Monoaminen, wie Butylamin, seinen Isomeren und höheren Homologen und/oder primären Alkanolaminen, wie Monoethanolamin und dessen Homologen, besonders

bevorzugt primär-tertiäre Diamine, insbesonders N,N-Dialkylaminoalkylendiamine, wie N,N-Dimethylaminoethylamin oder N,N-Diethylaminopropylamin eingesetzt.

Anteilweise können auch diprimäre Amine wie Ethylendiamin und Homologe eingesetzt werden.

In einer vorteilhaften Ausführungsform erfolgt die Kondensation in der Weise, daß man die Komponenten in Gegenwart eines mit Wasser ein Azeotrop bildenden Lösemittels, wie Toluol oder einem entsprechenden Bensinkohlenwasserstoff, unter Berücksichtigung einer eventuellen Exothermie, auf die für die azeotrope Entfernung des Reaktionswassers notwendige Temperatur erwärmt.Nach Abtrennung der berechneten Wassermenge wird das Kreislaufmittel unter Vakuum entfernt und das Reaktionsprodukt in einem aprotischen Lösemittel gelöst.

Das so erhaltene Reaktionsprodukt, welches pro Molekül durchschnittlich mindestens eine sekundäre Aminogruppe aufweist, wird in der nächsten Stufe bei 30 bis 50° C mit einem halbblockierten Diisocyanat umgesetzt, wobei für jede NH-Gruppe 1 Mol der Isocyanatverbindung zum Einsatz kommt. Durch die Umsetzung der NH-Gruppen mit den halbblockierten Diisocyanaten werden die erwünschten Harnstoffgruppierungen gebildet. Gegebenenfalls vorhandene Hydroxylgruppen werden dabei aufgrund der bevorzugten Reaktion zwischen NH- und NCO-Gruppen nur in vernachlässigbarem Umfang in die Reaktion einbezogen.

Die halbblockierten Diisocyanate werden in bekannter Weise hergestellt, wobei vorzugsweise solche Diisocyanate, deren NCO-Gruppen verschiedene Reaktivität aufweisen, wie Toluylendiisocyanat oder Isophorondiisocyanat, verwendet werden.

Als Blockierungsmittel dienen bevorzugt aliphatische Monoalkohole, welche - gegebenenfalls in Gegenwart der üblichen Katalysatoren - unter den Einbrennbedingungen abgespalten werden. Andere Blockierungsmittel sind beispielsweise Phenole, Oxime, Amine, ungesättigte Alkohole, Caprolactam, etc.

Die Verknüpfung der Kondensationsverbindungen mit den sekundären Aminogruppen erfolgt im Sinne einer Aminoalkylierung mit Hilfe von Formaldehyd bei 80 bis 130° C unter azeotroper Abtrennung des gebildeten Reaktionswassers.

Als NH-Verbindungen können einfache disekundäre Amine, wie N,N'-Dialkylakylendiamine oder N,N'-Dialkylpolyalkylendiamine eingesetzt werden.

Vorzugsweise werden jedoch höhermolekulare Verbindungen, wie Umsetzungsproudkte aus Di- oder Polyepoxidverbindungen mit primären Aminen, insbesonders mit prim.-tert. Alkylendiaminen, verwendet.

In der letzten Verfahrensstufe werden die phenolischen Hydroxylgruppen durch Veretherung mit Epoxidverbindungen, vorzugsweise mit Monoepoxidverbindungen, wie Glycidylester, insbesonders solchen der sogenannten KOCH-Säuren, oder Glycidylethern wie 2-Ethylhexylglycidylether, reagiert. Beim Einsatz von Polyepoxidverbindungen ist die hohe Funktionalität der Systeme zu beachten. Üblicherweise werden diese Verbindungen daher nur in untergeordneten Anteilen und in Mischung mit Monoepoxidverbindungen eingesetzt. Die Umsetzung erfolgt bei 80 bis 130° C bis zu einem Epoxidwert von praktisch 0. Aufgrund der im Molekül vorhandenen basischen Gruppen ist eine zusätzliche Katalysierung normalerweise nicht notwendig.

Bei der Formulierung der Ansätze ist darauf zu achten, daß die Endprodukte die erforderliche Basizität aufweisen, um eine ausreichende Stabilität der wäßrigen Lösung des Bindemittels zu gewährleisten. Die Einführung dieser vorzugsweise auf tertiären Aminogruppen beruhenden Basizität,entsprechend einer Aminzahl von mindestens 25 mg KOH/g, kann einerseits durch Verwendung von primär-tertiären Diaminen bei der Herstellung der Kondensationsverbindung oder andererseits durch Einsatz von entsprechenden Aminen als Blockierungsmittel für die Halbblockierung der Diisocyanate oder durch entsprechende Rohstoffauswahl für die NH-Gruppen tragende Komponente erfolgen.

Zur Erzielung der Wasserverdünnbarkeit werden die basischen Gruppen des Reaktionsproduktes mit Säuren, vorzugsweise mit Ameisensäure, Essigsäure oder Milchsäure partiell oder vollständig neutralisiert. Für eine praxisgerechte Verdünnbarkeit genügt dafür üblicherweise eine Neutralisation von 20 - 60 % der basischen Gruppen oder eine Menge von ca.20 bis 60 Millimol Säure pro 100 g Festharz. Die Bindemittel werden dann mit deionisiertem Wasser auf die gewünschte Konzentration verdünnt;gegebenenfalls werden sie vor der Neutralisation oder vor der Verdünnung oder im teilverdünnten Zustand mit Vernetzungskatalysatoren, Pigmenten, Füllstoffen und anderen Zusatzstoffen zu pigmentierten Lacken verarbeitet.

Die Formulierung solcher Lacke sowie deren Verarbeitung im Elektrotauchlackierverfahren sind dem Fachmann bekannt und in der Literatur beschrieben. Die Härtung der abgeschiedenen Überzüge erfolgt beim Einsatz als Grundierung bei Temperaturen zwischen 150 und 170° C während 10 bis 30 Minuten. Soferne die Bindemittel nicht in ausreichendem Maße selbstvernetzende Strukturen aufweisen, können auch zusätzliche Vernetzungsmittel, wie blockierte Isocyanate oder Aminoharze bzw. Phenolharze, mitverwendet werden. Die Produkte können bei entsprechender Formulierung auch durch andere Verfahren, wie Tauchen, Walzen oder Spritzen aufgebracht werden. Gegebenenfalls können die Bindemittel auch in organischen Lösungsmitteln verarbeitet werden.

Die nachstehenden Beispiele erläutern die Erfindung, ohne sie in ihrem Umfang zu beschränken. Es wird nochmals darauf hingewiesen, daß viele der in der EP-A2-0 209 857 bzw. im EP-A1-0 158 128 angegebenen Produkte unter Berücksichtigung der Funktionalität, vorteilhaft als Zwischenprodukte eingesetzt werden können.

Diese Zwischenprodukte sind in den Beispielen als jeweilige Komponente (A) bezeichnet. Als Komponente (B) werden die NH-Gruppen tragenden Komponenten bezeichnet.

Alle Angaben in Teilen oder Prozenten beziehen sich, soferne nichts anderes angegeben ist, auf Gewichtseinheiten. Bei Angaben der molaren Verhältnisse sind die Teile Gramm.

Beispiel 1:

(a) Komponente (A): In einem geeigneten Reaktiongefäß werden 228 Tle (1 Mol) Bisphenol A mit 204 Tlen (2 Mol) Dimethylaminopropylamin und 66 Tlen (2 Mol) Paraformaldehyd (91% $CH_2O$) bei 40 bis 60° C unter gelegentlicher Kühlung 30 Minuten reagiert. Nach Zugabe von 480 Tlen Toluol wird auf Destillationstemperatur erhitzt und das Reaktionswasser azeotrop abgetrennt. Sobald die errechnete Wassermenge abgetrennt ist, wird der Ansatz auf 50° C gekühlt. Bei maximal 60° C werden dann unter Kühlung 664 Tle (2 Mol) eines mit Isodecylalkohol halbblockierten Toluylendiisocyanates gleichmäßig zugegeben. Die Temperatur von 60° C wird bis zum Erreichen eines NCO-Wertes von praktisch 0 gehalten.

(b) Komponente (B): 950 Tle (1 Mol) eines Diepoxidharzes auf der Basis von Bisphenol A werden in Toluol gelöst, sodaß eine 70%ige Lösung ensteht. Zu dieser Lösung werden im Laufe von 3 Stunden bei 30 bis max. 40° C eine Mischung aus 400 Tlen Toluol und 258 Tlen (2 Mol) 2-Ethylhexylamin zugegeben und die Reaktion anschließend bei 40 bis 50 C bis zu einem Epoxidwert von praktisch 0 weitergeführt.

(c) Verknüpfungsreaktion: 3200 Tle der Komponente (A) werden mit 2015 Tlen der Komponente (B) und 66 Tlen (2 Mol) Paraformaldehyd (91% $CH_2O$) bei steigender Temperatur zwischen 80 und 130° C unter azeotroper Abtrennung des Reaktionswassers kondensiert. Nach Erreichen der theoretischen Wassermenge wird das Schleppmittel unter Vakuum weitgehend entfernt und der Ansatz mit Ethoxypropanol auf einen Festkörpergehalt von 70% verdünnt.

(d) Veretherung der phenolischen Hydroxylgruppen: Der in Stufe (c) erhaltene Ansatz wird mit 736 Tlen (4 Mol) Dodecenoxid versetzt und bei 90 bis 100° C bis zum vollständigen Umsatz der Epoxidverbindung reagiert. Das Produkt ist nach Zugabe von 40 Millimol Essigsäure pro 100 g Festharz einwandfrei wasserverdünnbar.

(e) Weiterverarbeitung und Prüfung:

Aus dem Bindemittel wurde in bekannter Weise ein Lack hergestellt, wobei 83 Tle einer Pigmentpaste, welche pro 100 Tlen Festharz 1 Tl Farbruß, 12 Tle basisches Bleisilikat und 147 Tle Titandioxid enthält, mit weiteren 70 Tlen Festharz des Beispiels aufgelackt, neutralisiert und mit deionisiertem Wasser auf einen Feststoffgehalt von 17% verdünnt wurden. Der Lack wurde auf als Kathode geschalteten zinkphosphatierten Stahlblechen abgeschieden und 25 min. bei 160° C gehärtet. Bei einer Trockenfilmstärke von 22 μm zeigen die Bleche im Salzsprühtest nach ASTM-B-117-85 nach 1600 Stunden einen Angriff am Kreuzschnitt von max. 2 mm. Beim Klima-Wechseltest (1 Runde = 4 Stunden Salzsprühtest + 4 Stunden Trockenlagerung + 16 Stunden Feuchtraumtest) zeigen die Bleche nach 40 Runden eine Unterrostung von weniger als 2 mm.

Beispiel 2:

(a) Komponente (A): Wie im Beispiel 1 beschrieben, werden 150 Tle (1 Mol) p-tert.-Butylphenol mit 130 Tlen (1 Mol) N,N-Diethylaminopropylamin und 33 Tlen (1 Mol) Paraformaldehyd (91 % $CH_2O$) in Gegenwart von 135 Tlen Toluol unter Abtrennung des gebildeten Reaktionswassers kondensiert. Sobald die Wasserbildung beendet ist, wird der Ansatz aus 50° C gekühlt. Bei maximal 60° C werden dann 304 Tle (1 Mol) eines mit 2-Ethylhexanol halbblokkierten Toluylendiisocyanats zugegeben und bis zum einem NCO-Wert von 0 reagiert.

(b) Komponente (B): Wie im Beispiel 1 (b) werden 380 Tle (1 Mol) eines Bisphenol A-Diepoxidharzes in 80%iger Lösung in Toluol mit 146 Tlen (2 Mol) Monoisopropanolamin reagiert.

(c) Verknüpfungsreaktion: 732 Tle der Komponente (A) werden mit 311 Tlen der Komponente (B) und 33 Tlen (1 Mol) Paraformaldehyd (91 % $CH_2O$) wie in Beispiel 1 (c) kondensiert. Nach Abdestillieren des Toluols wird der Ansatz mit Diethylenglykoldimethylether auf einen Festkörpergehalt von 70 % verdünnt.

(d) Veretherung der phenolischen Hydroxylgruppen : Der in Stufe (c) erhaltene Ansatz wird mit 95 Tlen (0,25 Mol) eines Bisphenol A-Diepoxidharzes und 93 Tlen (0,5 Mol) 2-Ethylhexylglycidylether bei 110 -

120 °C bis zur vollständigen Umsetzung der Epoxidgruppen reagiert. Das Produkt ist nach Zugabe von 35 Millimol Ameisensäure pro 100 g Festharz einwandfrei wasserverdünnbar.

(e) Weiterverarbeitung und Prüfung: Gemäß den Angaben im Beispiel 1 (e) wird ein Elektrotauchlack hergestellt und appliziert. Die Prüfung der 25 Minuten bei 170 °C eingebrannten Blechen im Salzsprühtest ergibt nach 2000 Stunden einen Angriff von max. 2 mm. Im Wechseltest werden 60 Runden erreicht.

Beispiel 3:

(a) Komponente (A): In einem geeigneten Reaktionsgefäß werden 129 Tlen (1 Mol) 2-Ethylhexylamin in Gegenwart von 186 Tlen Toluol bei 30 bis 50 °C unter Kühlung mit 304 Tlen (1 Mol) eines mit 2-Ethylhexanol halbblokkierten Toluylendiisocyanats umgesetzt. Nach Ende der Zugabe sind alle Isocyanatgruppen verbraucht.

Der Ansatz wird dann mit 47 Tlen (0,5 Mol) Phenol, 100%ig, und 33 Tlen (1 Mol) Paraformaldehyd, 91%ig, versetzt und bei steigender Temperatur das Reaktionswasser azeotrop entfernt. Anschließend wird das Toluol im Vakuum entfernt und durch die gleiche Menge Methoxypropanol ersetzt.

(b) Komponente (B): 700 Tle eines flüssigen Polybutadienöls (ca. 75 % 1,4-cis-, ca. 24 % 1,4-trans- und ca. 1 % Vinyldoppelbindungen; Molekulargewicht: 1500 ± 15 %) werden in bekannter Weise in Gegenwart von 0,05 Tlen Diphenylparaphenylendiamin (Inhibitor) bei 200 °C mit 100 Tlen Maleinsäureanhydrid vollständig umgesetzt. Nach Kühlen wird das Addukt mit 130 Tlen 2-Ethylhexanol bei 120 °C zum Halbester umgesetzt. 110 Tle dieses Halbesters (entsprechend ca. 0.12 Mol COOH-Gruppen) werden mit 212 Tlen eines Bisphenol A-Diepoxidharzes (Epoxidäquivalentgewicht ca. 190) in 80%iger Lösung in Diethylenglykyoldimethylether bei 120 °C bis zu einer Säurezahl von praktisch 0 umgesetzt. Nach Zusatz von weiteren 108 Tlen Diethylenglykoldimethylether, 59 Tlen (0,45 Mol) N,N-Diethylaminopropylamin und 59 Tlen (0,45 Mol) 2-Ethylhexylamin wird der Ansatz bei 65 bis 70 °C bis zu einem Epoxidwert von praktisch 0 reagiert.

(c) Verknüpfungsreaktion: 1356 Tle der Komponente (A), das ist eine Menge, die einer formaldehydreaktiven Stelle am Phenol enstspricht, werden mit 629 Tlen der Komponente (B), d. i. eine Menge, die ca. 0,9 Mol NH-Gruppen enthält, und 33 Tlen (1 Mol) Paraformaldehyd (91 % $CH_2O$) bei 80 bis 100 °C so lange umgesetzt, bis der Gehalt an freiem Formaldehyd auf unter 0,3 % der eingesetzten Menge abgesunken ist.

(d) Veretherung der phenolischen Hydroxylgruppen: Die nach (c) erhaltene Lösung wird mit 150 Tlen (1 Mol) Phenylglycidylether bei 90 bis 110 °C bis zu einem Epoxidwert von 0 reagiert. Das Produkt ist nach Zugabe von 40 Millimol Ameisensäure pro 100 g Festharz wasseverdünnbar.

(e) Weiterverarbeitung und Prüfung: Gemäß den Angaben im Beispiel 1 (e) wird ein Elektrotauchlack hergestellt und appliziert. Die Prüfung der 25 min. bei 160 °C eingebrannten Bleche ergibt im Salzsprühtest nach 1800 Stunden einen Angriff von max. 2 mm. Im Wechseltest werden 60 Runden erreicht.

Beispiel 4:

(a) Komponente (A): Es wird das im Beispiel 1 (a) beschriebene Zwischenprodukt eingesetzt.

(b) Komponente (B): 500 Tle (2 Mol) eines technischen Gemisches aus Glycidylestern der 1,1-Dimethyl-($C_7$ - $C_9$)-alkan-carbonsäuren werden bei 80 bis 100 °C mit 116 Tlen (1 Mol) 1,6-Hexamethylendiamin bis zur vollständigen Umsetzung der Epoxidgruppen umgesetzt.

(c) Verknüpfungsreaktion: 3200 Tle Komponente (A) werden mit 616 Tlen Komponente (B) und 66 Tlen (2 Mol) Paraformaldehyd (91 % $CH_2O$), bei steigender Temperatur zwischen 80 und 130 °C unter Abtrennung des Reaktionswassers kondensiert. Anschließend wird das Toluol im Vakuum abgezogen und ein Festkörpergehalt von 70 % mit Ethoxypropanol eingestellt.

(d) Veretherung der phenolischen Hydroxylgruppen: Der nach (c) erhaltene Ansatz wird mit 558 Tlen (3 Mol) 2-Ethylhexylglycidylether und 475 Tlen (0,5 Mol) eines Bisphenol A-Diepoxidharzes bei 100 bis 105 °C bis zur vollständigen Umsetzung der Epoxidgruppen reagiert. Das Produkt ist nach Zusatz von 35 Millimol Essigsäure pro 100 g Festharz wasseverdünnbar.

(e) Weiterverarbeitung und Prüfung: Gemäß den Angaben im Beispiel 1 (e) wird ein Elektrotauchlack hergestellt und appliziert. Die Prüfung der 25 min. bei 155 °C eingebrannten Bleche im Salzsprühtest ergibt nach 1800 Stunden einen Angriff von max. 2 mm. Im Wechseltest werden 60 Runden erreicht.

## Ansprüche

1. Verfahren zur Herstellung von nach Protonierung wasserverdünnbaren, selbstvernetzenden kationischen

Lackbindemitteln auf der Basis von blockierte Isocyanatgruppen aufweisenden Aminoalkylierungsprodukten von Phenolen und von Epoxidverbindungen, dadurch gekennzeichnet, daß man ein Kondensat der Formel

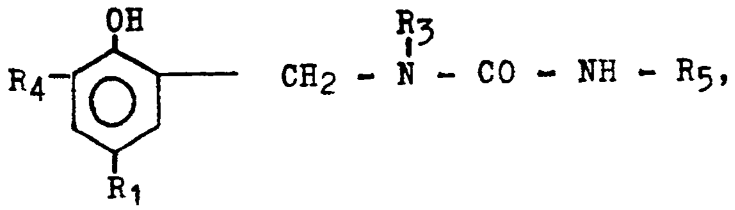

wobei

$R_1$ ein Wasserstoffatom, einen Alkylrest, einen Rest

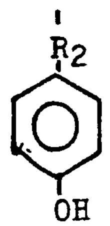

oder

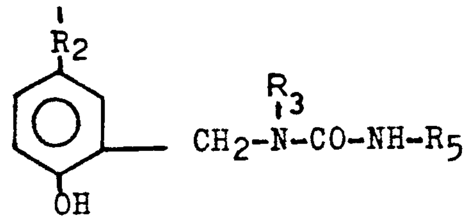

oder

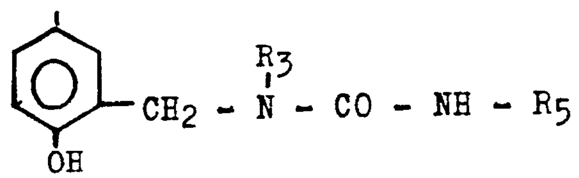

,

$R_2$ einen Rest

$$-CH_2-,\ CH_3-\overset{|}{\underset{|}{C}}-CH_3$$

$R_3$ einen Alkyl-, Hydroxyalkyl- oder einen tert-Aminoalkylrest,

$R_4$ ein Wasserstoffatom,bzw. bei $R_1$ = H, ein Wasserstoffatom oder einen Rest $-CH_2-N(R_3)-CO-NH-R_5$,

und

$R_5$ den Rest, welcher aus einem mit einer monofunktionellen Verbindung halbblockierten Diisocyanat stammt, bedeutet,

mit, bezogen auf die formaldehydreaktiven Stellen der Phenolkörper des Kondensats, 0,3 bis 1,0 Mol Formaldehyd, vorzugsweise in Form von Paraformaldehyd, und mit einem N,N'-Dialkylendiamin und/oder N,N'-Dialkylpolyoxyalkylendiamin oder mit einem Umsetzungsprodukt aus Di- oder Polyepoxidverbindungen mit primären Aminen, vorzugsweise primär-tertiären Alkylendiaminen, bei 80 bis 130 °C umsetzt, wobei eine, der molaren Menge des Formaldehyds äquivalente Menge an NH-Gruppen zum Einsatz kommt, und in einer weiteren Reaktionsstufe die phenolischen Hydroxylgruppen ganz oder teilweise mit Epoxidverbindungen umsetzt, wobei man die Ansätze so formuliert, daß durch das Kondensationsvorprodukt und/oder die Verknüpfungsreaktion und/oder durch das Blockierungsmittel für die Halbblockierung der Diisocyanate tertiäre Aminogruppen in einer Menge entsprechend einer Aminzahl von mindestens 25 mg KOH/g in das Endprodukt eingeführt werden.

2. Verwendung der gemäß Anspruch 1 hergestellten Lackbindemittel zur Formulierung von wasserverdünnbaren Lacken, insbesonders von kathodisch abscheidbaren Elektrotauchlacken.

**Claims**

1. Process for producing self-crosslinking cationic paint binders which are water-dilutable upon protonation and are based on aminoalkylation products, containing blocked isocyanate groups, of phenols and of epoxide compounds, characterised in that a condensation product of the formula

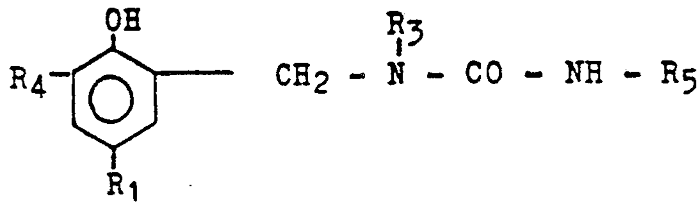

wherein

$R_1$ denotes a hydrogen atom, an alkyl radical or a radical

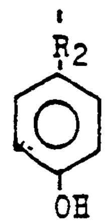

or

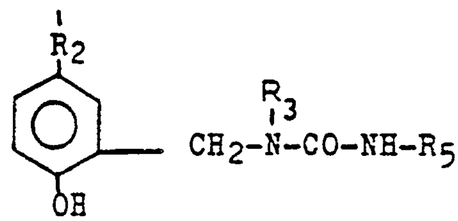

or

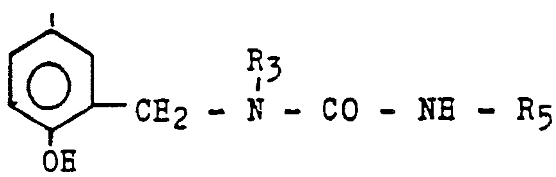

,

$R_2$ denotes a radical

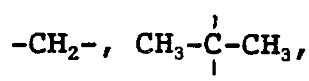

$R_3$ denotes an alkyl, hydroxyalkyl or tert.-aminoalkyl radical,

$R_4$ denotes a hydrogen atom or, if $R_1$ = H, a hydrogen atom or a radical $-CH_2-N(R_3)-CO-NH-R_5$, and

$R_5$ denotes the radical of a diisocyanate, semi-blocked with a monofunctional compound,

is reacted with, calculated on the formaldehyde-reactive sites of the phenol nuclei of the condensation product, 0.3 to 1.0 mol of formaldehyde, preferably in the form of paraformaldehyde, and with an N,N'-dialkylene-diamine and/or N,N'-dialkylpolyoxyalkylenediamine or with a reaction product of di- or polyepoxide compounds with primary amines, preferably primary-tertiary alkylenediamines, at 80 to 130 °C, an amount of NH groups equivalent to the molar amount of the formaldehyde being employed, and in a further reaction step the phenolic hydroxyl groups are partially or totally reacted with epoxide compounds, the mixtures being formulated such that tertiary amino groups are introduced into the end product in an amount corresponding to an amine number of at least 25 mg of KOH/g by the intermediate condensation product and/or the linking reaction and/or the blocking agent for semi-blocking the diisocyanates.

2. Use of the paint binders prepared according to Claim 1 for the formulation of water-dilutable paints, in particular cathodic electrodeposition paints.

**Revendications**

1. Procédé de préparation de liants pour peintures cationiques, autoréticulables, diluables à l'eau après protonation, à base de produits d'aminoalkylation de phénols et de composés époxydes comportant

des groupes isocyanates bloqués, caractérisé en ce qu'on fait réagir entre 80 et 130 °C un produit de condensation de formule

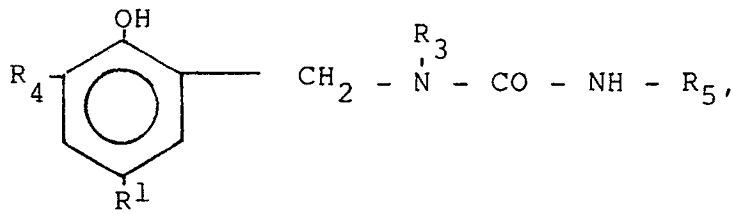

, où

$R_1$ représente un atome d'hydrogène, un reste alkyle, un reste

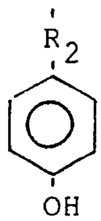

ou

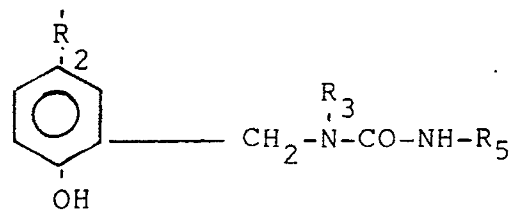

ou

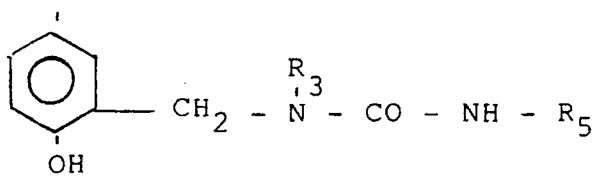

,

$R_2$ un reste

$$-CH_2-,\ CH_3 - \underset{|}{\overset{|}{C}} - CH_3,$$

$R_3$ un reste alkyle, hydroxyalkyle ou un reste tert.aminoalkyle,

$R_4$ un atome d'hydrogène ou bien, avec $R_1$ = H, un atome d'hydrogène ou un reste $-CH_2-N(R_3)-CO-NH-R_5$ et

$R_5$ représente un reste provenant d'un diisocyanate semi-bloqué avec un composé fonctionnel, avec 0,3 à 1,0 mole de formaldéhyde par rapport aux sites réactifs vis à vis du formaldéhyde des corps phénoliques du produit de condensation, de préférence sous forme de paraformaldéhyde et avec une N,N'-dialkyiènediamine et/ou une N,N'dialkylpolyoxyalkylènediamine ou bien avec un produit de réaction obtenu à partir de composés diou polyépoxydes et d'amines primaires, de préférence d'alkylènediamines primaires-tertiaires, moyennant quoi on met en oeuvre une quantité de groupes NH équivalant à la quantité molaire de formaldéhyde et que, dans une étape réactionnelle ultérieure, on fait réagir en totalité ou en partie les groupes hydroxyles phénoliques avec des composés époxydes, les compositions étant formulées de telle manière que, par le biais du produit intermédiaire de condensation et/ou de la réaction d'enchaînement et/ou de l'agent de blocage pour le semi-blocage des diisocyanates, des groupes amino tertiaires scient introduits dans le produit final en une quantité correspondant à un indice d'amine d'au moins 25 mg de KOH/g.

**2.** Utilisation des liants pour peintures préparés selon la revendication 1 pour la formulation de peintures diluables à l'eau, notamment de peintures électrophorétiques déposables à la cathode.